# EUROPÄISCHE PATENTSCHRIFT

(11) **EP 1 950 463 B1**
(45) Veröffentlichungstag und Bekanntmachung des Hinweises auf die Patenterteilung: **22.12.2010**
(21) Anmeldenummer: 07100993.0
(22) Anmeldetag: 23.01.2007
(51) Int. Cl.: F16H 61/12, F16H 61/688

(54) **Hydraulische Steuerungsvorrichtung für ein automatisiertes Doppelkupplungsgetriebe**
Hydraulic control device for automated double clutch transmission
Dispositif de commande hydraulique pour une boîte de vitesses automatisée à double embrayage

(43) Veröffentlichungstag der Anmeldung: 30.07.2008
(73) Patentinhaber: Getrag Ford Transmissions GmbH, 50735 Köln (DE)
(72) Erfinder: Leibbrandt, Martin, 50181 Bedburg (DE); Moehlmann, Reinhard, 50739 Köln (DE)

(56) Entgegenhaltungen:
- EP-A- 1 519 082
- EP-A- 1 635 091
- DE-C1- 4 117 736

## Beschreibung

Die Erfindung betrifft eine hydraulische Steuerungsvorrichtung für ein automatisiertes Doppelkupplungsgetriebe sowie ein Verfahren zum Steuern des Getriebes mit der hydraulischen Steuerungsvorrichtung.

Doppelkupplungsgetriebe sind seit längerem bekannt und werden bevorzugt in Kraftfahrzeugen eingesetzt. Ein Doppelkupplungsgetriebe weist im allgemeinen zwei Teilgetriebe auf, denen jeweils eine separate Kupplung und eine Gruppe von Gängen zugeordnet sind. Aufgrund des erheblichen mechanischen Aufwands, die zwei Kupplungen zu betätigen sowie die Gänge der beiden Teilgetriebe zu schalten, sind Doppelkupplungsgetriebe zumeist automatisiert ausgebildet, d. h., dass sowohl die Betätigung der Kupplungen als auch das Schalten der Gänge über zugeordnete Hilfsantriebe erfolgt, die beispielsweise in Form von hydraulisch beaufschlagten Stellgliedern ausgebildet sein können, die durch eine hydraulische Steuerungsvorrichtung angesteuert werden.

Aus der EP 1 635 091 A1 ist eine gattungsbildende hydraulische Steuerungsvorrichtung für ein automatisiertes Doppelkupplungsgetriebe bekannt, das eine erste Kupplung mit einem ersten Teilgetriebe und eine zweite Kupplung mit einem zweiten Teilgetriebe sowie ein Schaltsystem (12) zum Ein-/Auslegen von Gängen der zwei Teilgetriebe aufweist. Die hydraulische Steuerungsvorrichtung umfasst eine Regelungseinheit, die wenigstens einen regelbaren Druck und/oder einen regelbaren Volumenstrom für die Betätigung der ersten und zweiten Kupplung und für die Betätigung des Schaltsystems (12) vorgibt. Des weiteren umfasst die Steuerungsvorrichtung eine Umschalteinrichtung, die zwischen der Regelungseinheit und den Kupplungen beziehungsweise dem Schaltsystem angeordnet ist und durch die der regelbare Druck beziehungsweise der regelbare Volumenstrom auf die Kupplungen oder das Schaltsystem geschaltet werden kann. Die Regelungseinheit besteht aus einem ersten Regelventil und einem zweiten Regelventil, während die Umschalteinrichtung ein erstes Umschaltventil und ein zweites Umschaltventil aufweist. In einer Stellung A_{I} verbindet das erste Umschaltventil das erste Regelventil mit der ersten Kupplung und trennt das erste Regelventil von dem Schaltsystem. In einer Stellung B_{I} verbindet das erste Umschaltventil das erste Regelventil hingegen mit dem Schaltsystem und trennt das erste Regelventil von der ersten Kupplung. Auch das zweite Umschaltventil kann zwei Stellungen einnehmen, wobei es in einer Stellung A_{II} das zweite Regelventil mit der zweiten Kupplung verbindet und das zweite Regelventil von dem Schaltsystem trennt. In einer Stellung B_{II} stellt das zweite Umschaltventil eine Verbindung zwischen dem zweiten Regelventil und dem Schaltsystem her, während es das zweite Regelventil von der zweiten Kupplung trennt. Die Steuerungsvorrichtung gemäß der EP 1 635 091 A1 ermöglicht somit ein Schalten der Gänge mit jeweils einem der beiden Regelventile.

Um beide Kupplungen bei Ausfall eines Regelventils in einer Notlaufphase weiterhin betätigen zu können, schlägt die EP 1 635 091 A1 vor, dass in der Stellung B_{I} des ersten Umschaltventils und in der Stellung B_{II} des zweiten Umschaltventils das erste Regelventil mit der zweiten Kupplung und das zweite Regelventil mit der ersten Kupplung verbunden ist. Ist beispielsweise das erste Regelventil ausgefallen, kann die erste Kupplung über das zweite Regelventil angesteuert werden, soweit sich das erste und zweite Umschaltventil jeweils in der Stellung B_{I}, B_{II} befinden. Die zweite Kupplung lässt sich weiterhin ebenfalls durch das zweite Regelventil betätigen, wenn dieses in die Stellung A_{II} geschaltet wird.

Bei dieser Lösung können in der Notlaufphase schwerwiegende Probleme auftreten, wenn eines der Regelventile in einer geöffneten Stellung ausfällt. Dann liefert das ausgefallene Regelventil einen unerwünschten Druck, der es schwierig bzw. unmöglich macht, eine der Kupplungen zu öffnen, um einen Gang des dieser Kupplung zugeordneten Teilgetriebes auslegen zu können. Zudem benötigen die Umschaltventile für diese Lösung viele Eingänge und Ausgänge, wodurch die Umschaltventile aufwändig aufgebaut sind und einen entsprechenden Platzbedarf haben.

Der Erfindung liegt daher die Aufgabe zugrunde, eine hydraulische Steuerungsvorrichtung für ein automatisiertes Doppelkupplungsgetriebe bereitzustellen, die einfach, kostengünstig und kompakt aufgebaut ist und bei Ausfall eines Regelventils ohne Sicherheitsrisiko möglichst viele Gänge zur Verfügung stellt, um ein mit dem Doppelkupplungsgetriebe ausgestattetes Kraftfahrzeug weiterhin im Notlaufbetrieb fahren zu können.

Die der Erfindung zugrundeliegende Aufgabe wird durch die Steuerungsvorrichtung gemäß Anspruch 1 gelöst. Bevorzugte Ausführungsbeispiele können den Ansprüchen 2 bis 5 entnommen werden. Zudem wird in Anspruch 6 ein Verfahren zum Steuern der erfindungsgemäßen Steuerungsvorrichtung vorgeschlagen.

Die Steuerungsvorrichtung gemäß Anspruch 1 zeichnet sich dadurch aus, dass in der Stellung B_{I} des ersten Umschaltventils und bei Stellung B_{II} des zweiten Umschaltventils eine Verbindung zwischen dem zweiten Regelventil und der ersten Kupplung hergestellt ist und die zweite Kupplung drucklos gestellt ist.

Bei einem Ausfall eines Regelventils in einer geöffneten Stellung ermöglicht die erfindungsgemäße Steuervorrichtung einen geordneten Notlaufbetrieb, ohne dass es dabei zu Schalt-Konstellationen kommen kann, die eine Gefahr für das Doppelkupplungsgetriebe oder für ein mit dem Doppelkupplungsgetriebe ausgestattetes Kraftfahrzeug bedeuten könnten. Durch die erfindungsgemäße Steuerungsvorrichtung erfolgt eine Priorisierung der ersten Kupplung, wobei gleichzeitig die zweite Kupplung nur bedingt einsatzfähig ist bzw. in Kauf genommen wird, dass über die zweite Kupplung im Notlaufbetrieb ein Fahren des Kraftfahrzeugs nicht möglich ist. Jedoch gewährleistet die vorgenommene Priorisierung ein zuverlässiges Ein- und Auslegen der Gänge des ersten Teilgetriebes sowie ein sicheres Öffnen und Schließen der ersten Kupplung. Wie die Steuerungsvorrichtung bei Ausfall eines Regelventils bevorzugt arbeitet, wird später im Einzelnen noch erläutert.

In einem bevorzugten Ausführungsbeispiel weist das erste Teilgetriebe einen ersten Vorwärtsgang und einen Rückwärtsgang auf. Somit wird sichergestellt, dass das Kraftfahrzeug bei Ausfall eines Regelventils manövrierfähig oder rangierfähig ist. Aus dem Stand kann das Kraftfahrzeug ohne Schwierigkeiten sowohl rückwärts als auch vorwärts bewegt werden.

In einem bevorzugten Ausführungsbeispiel ist zwischen dem ersten Regelventil bzw. dem zweiten Regelventil und dem Schaltsystem ein Umschalter vorgesehen, der sicherstellt, dass das Schaltsystem entweder mit dem Druck/Volumenstrom des ersten Regelventils oder mit dem Druck/Volumenstrom des zweiten Regelventils beaufschlagt wird. Dieser Umschalter dient dazu, die Verbindung zwischen dem Schaltsystem und dem Regelventil zu trennen, das (augenblicklich) nicht für die Ansteuerung des Schaltsystems vorgesehen ist oder aufgrund einer Störung die Ansteuerung nicht übernehmen kann. Die Ansteuerung des Schaltsystems wird daher nicht durch eine ungewollte Überlagerung von zwei Regelventilen, von denen eines möglicherweise defekt ist, beeinträchtigt.

Vorzugsweise ist der Umschalter als Wechselventil ausgebildet. Das Wechselventil weist dabei einen ersten und zweiten Eingang sowie einen Ausgang auf, wobei der erste Eingang mit dem ersten Regelventil und der zweite Eingang mit dem zweiten Regelventil verbunden ist. Der Ausgang des Umschalters ist mit dem Schaltsystem verbunden. Das Wechselventil stellt eine Verbindung zwischen Ausgang und dem Eingang her, an dem ein höherer Druck anliegt, während es gleichzeitig die Verbindung zwischen Ausgang und dem Eingang mit niedrigerem Druck trennt.

Vorzugsweise weist die Steuerungsvorrichtung ein Gruppenauswahl auf, durch die die Regelungseinheit entweder mit einer ersten, dem ersten Teilgetriebe zugeordneten Gruppe von Aktuatoren bzw. Stellgliedern oder mit einer zweiten, dem zweiten Teilgetriebe zugeordneten Gruppe von Aktuatoren bzw. Stellgliedern verbunden wird. Diese Gruppenauswahl kann ein Ventil mit vorzugsweise zwei Stellungen umfassen, wobei in einer ersten Stellung der geregelte Druck/Volumenstrom der Regelungseinheit auf die erste Gruppe und in einer zweiten Stellung der geregelte Druck/Volumenstrom auf die zweite Gruppe von Aktuatoren geschaltet wird. Gleichzeitig wird in der ersten Stellung des Ventils der Gruppenauswahl die Verbindung zwischen Regelungseinheit und der zweiten Gruppe von Aktuatoren getrennt. Analog wird in der zweiten Stellung die erste Gruppe von Aktuatoren von der Regelungseinheit getrennt.

Die Schaltreihenfolge und die Schaltlogik innerhalb der erfindungsgemäßen Steuerungsvorrichtung können beliebig variiert werden. Im normalen Fahrbetrieb wird jeweils ein Umschaltventil in dessen Stellung B (B_{I} oder B_{II}) geschaltet, wenn das Schaltsystem zum Ein-/Auslegen von Gängen aktiviert werden muss. Ansonsten befinden sich die Umschaltventile in ihren jeweiligen Stellungen A (A_{I}, A_{II}), sodass das erste Regelventil mit der ersten Kupplung und das zweite Regelventil mit der zweiten Kupplung verbunden ist.

Bei Ausfall des ersten Regelventils werden nach einem erfindungsgemäßen Verfahren zum Steuern eines Doppelkupplungsgetriebes mit der oben beschriebenen Steuerungsvorrichtung das erste Umschaltventil in die Stellung B_{I} und das zweite Umschaltventil in Stellung B_{II} geschaltet. Dadurch wird die zweite Kupplung drucklos gestellt, so dass diese kein Drehmoment übertragen kann. Durch die Stellungen B_{I}, B_{II} der beiden Umschaltventile ist das zweite Regelventil mit der ersten Kupplung verbunden. Damit kann die erste Kupplung geregelt geöffnet und geschlossen werden, so dass sie Drehmoment mit und ohne Schlupf übertragen kann.

Bei Ausfall des ersten Regelventils werden die Gänge des ersten Teilgetriebes mit Hilfe des zweiten Regelventils ein- und ausgelegt, wenn das erste Regelventil in einer geschlossenen Stellung ausgefallen ist. Bei einem Ausfall in geöffneter Stellung des ersten Regelventils wird der Druck zum Schalten - durch das geöffnete erste Regelventil hindurch - von einem Hauptdruckregler einer Ölversorgung der Steuerungsvorrichtung gesteuert. Dabei befindet sich dann das erste Umschaltventil in der Stellung B_{I}, durch die eine Verbindung zwischen ersten Regelventil und Schaltsystem hergestellt ist.

Bevor jedoch wie oben beschrieben verfahren werden kann, wird vorzugsweise ein etwaig eingelegter Gang des zweiten Teilgetriebes ausgelegt. Auch hier wieder hängt die Schaltstellung der Steuervorrichtung davon ab, ob das erste Regelventil in der geschlossenen oder in der geöffneten Stellung ausgefallen ist. In der geschlossenen Stellung des ausgefallenen ersten Regelventils erfolgt das Auslegen des betreffenden Ganges durch den zweiten Druckregler, während in geöffneter Stellung der Druck zum Auslegen direkt durch den Hauptdruckregler vorgegeben wird.

Bei Ausfall des zweiten Regelventils wird das zweite Umschaltventil in Stellung A_{II} gehalten bzw. geschaltet. Ist im zweiten Teilgetriebe kein Gang eingelegt, so überträgt das zweite Teilgetriebe kein Drehmoment, unabhängig davon, ob die zweite Kupplung geschlossen ist, was beim Ausfall des zweiten Regelventils in geöffneter Stellung die Folge wäre, oder ob die zweite Kupplung geöffnet ist, was beim Ausfall des zweiten Regelventils in geöffneter Stellung der Fall wäre.

Ist ein Gang des zweiten Teilgetriebes eingelegt, so wird dieser vorzugsweise bei Ausfall des zweiten Regelventils zunächst ausgelegt, bevor die erste Kupplung und das Schaltsystem wie oben beschrieben angesteuert werden. In geöffneter Stellung des ausgefallen zweiten Regelventils wird über den Hauptdruckregler der Gang ausgelegt. Dabei ist das zweite Umschaltventil in die Stellung B_{II} zu bringen. Fällt das zweite Regelventil in geschlossener Stellung aus, wird der Gang über das erste Regelventil ausgelegt, indem das erste Umschaltventil in Stellung B_{I} geschaltet wird. Ist ein Auslegen durch das erste Regelventil aufgrund zusätzlicher Randbedingungen in der Steuervorrichtung (Koppelung von Gruppenauswahl und erstes Umschaltventil durch ein gemeinsames Signalelement) nicht möglich, kann der Gang eingelegt bleiben, da aufgrund der geschlossenen Stellung des ausgefallenen zweiten Regelventils die zweite Kupplung nicht mit Druck beaufschlagt und daher geöffnet ist. Jedoch muss Sorge dafür getragen werden, dass die Geschwindigkeit des Kraftfahrzeugs auf einen mit dem eingelegten Gang verträglichen Wert begrenzt wird.

Anhand eines in den Figuren dargestellten Ausführungsbeispiels wird die Erfindung näher erläutert. Es zeigen:
- Figur 1: ein Ausführungsbeispiel der Erfindung in schematischer Darstellung;
- Figur 2: ein Blockschaltbild einer bevorzugten Umsetzung des Ausführungsbei- spiels der Figur 1

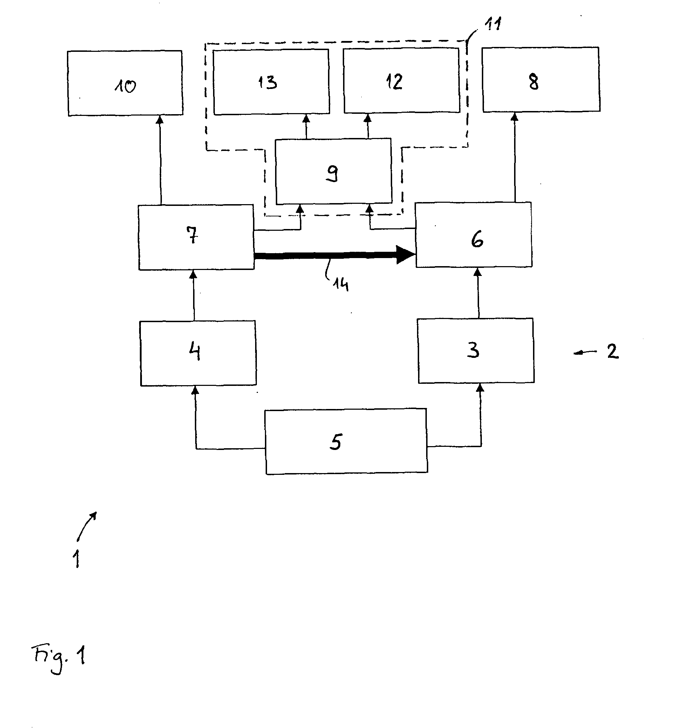

Figur 1 zeigt in schematischer Darstellung eine erfindungsgemäße hydraulische Steuerungsvorrichtung, die in ihrer Allgemeinheit mit 1 bezeichnet wird. Die Steuerungsvorrichtung 1 umfasst eine Regelungseinheit 2 mit einem ersten Regelventil in Form eines Druckregler 3 und mit einem zweiten Regelventil in Form eines Druckreglers 4. Eingangsseitig sind die beiden Druckregler 3, 4 an einer Druckölversorgung 5 angeschlossen.

Dem ersten Druckregler 3 ist ein erstes Umschaltventil 6 und dem zweiten Druckregler 4 ein zweites Umschaltventil 7 zugeordnet. Durch das erste Umschaltventil 7 lässt sich der erste Druckregler 3 entweder mit einer ersten Kupplung 8 oder mit einem Pfadselektor bzw. mit einer Gruppenauswahl 9 verbinden. Mittels des zweiten Umschaltventils 7 lässt sich ein geregelter Druck des zweiten Druckreglers 4 entweder auf die Gruppenauswahl 9 oder eine zweite Kupplung 10 schalten.

Mit der Steuerungsvorrichtung 1 lässt sich ein in einem Kraftfahrzeug eingebautes Doppelkupplungsgetriebe mit zwei separaten Kupplungen (erste und zweite Kupplung 9, 13) sowie mit mehreren Stellgliedern oder Aktuatoren steuern, durch die einzelne Gänge des Getriebes eingelegt oder ausgelegt werden können. Das Doppelkupplungsgetriebe umfasst ein erstes und zweites Teilgetriebe, die der ersten beziehungsweise zweiten Kupplung zugeordnet werden. Wird ein Druck auf einen Kupplungszylinder einer Kupplung gegeben, wird die Kupplung geschlossen, die ansonsten durch eine Federkraft offen gehalten wird. Im geschlossenen Zustand überträgt die Kupplung ein Drehmoment zwischen einer Antriebseinheit des Kraftfahrzeugs (beispielsweise ein Verbrennungsmotor) und dem zugehörigen Teilgetriebe.

Die Gruppenauswahl 9 ist Teil eines Schaltsystems 11, das eine erste Gruppe von Aktuatoren 12 und eine zweite Gruppe von Aktuatoren 13 umfasst. Durch die erste Gruppe von Aktuatoren 12 lassen sich die Gänge des ersten Teilgetriebes ein- und auslegen, während die zweite Gruppe von Aktuatoren 13 für das Ein- und Auslegen der Gänge des zweiten Teilgetriebes zuständig ist. Die Gruppenauswahl 9 leitet dabei den geregelten Druck der Regeleinheit 2 entweder auf die erste Gruppe von Aktuatoren 12 oder die zweite Gruppe von Aktuatoren 13. Zusätzlich umfasst das Schaltsystem 11 weitere, hier jedoch nicht dargestellte Schaltventile, um gezielt einen einzelnen Aktuator bzw. eine seiner Kammern ansteuern zu können.

Ein deutlich hervorgehobener Pfeil 14 in der Figur 1 soll verdeutlichen, dass die Schaltvorrichtung 1 in einer bestimmten Schaltkonstellation eine Verbindung zwischen dem zweiten Umschaltventil 7 und dem ersten Umschaltventil 6 herstellt. Diese Verbindung ermöglicht es, dass der zweite Druckregler 4 über die Umschaltventile 7, 6 die erste Kupplung 8 mit geregeltem Druck beaufschlagen kann. Ist die Verbindung gemäß Pfeil 14 hergestellt, wird die zweite Kupplung drucklos gestellt. Sie wird dabei sowohl vom ersten Druckregler als auch vom zweiten Druckreger getrennt.

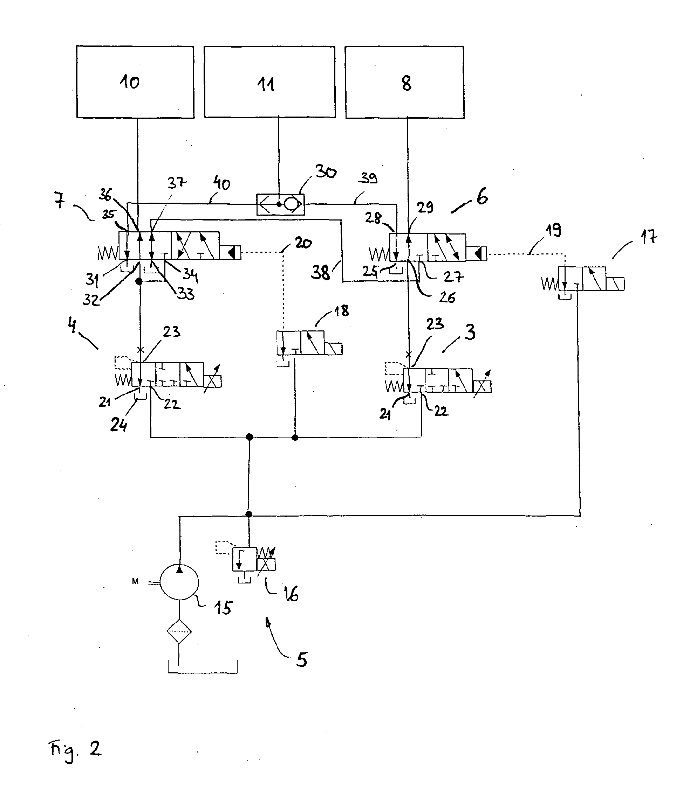

Figur 2 zeigt ein Blockschaltbild einer bevorzugten Umsetzung des Ausführungsbeispiels der Figur 1. Eine Pumpe 15 in Verbindung mit einem Hauptdruckregler 16 bildet im Wesentlichen die Ölversorgung 5.

Zum Betätigen des ersten Umschaltventils 6 und des zweiten Umschaltventils 7 sind ein Signalelement 17 bzw. ein Signalelement 18 vorgesehen. Das Signalelement 17 leitet über eine Signalleitung 19 ein Signal oder ein Signaldruck an das erste Umschaltventil 6. Durch das Signal lässt sich das Umschaltventil 7 betätigen oder schalten. Das zweite Umschaltventil 7 wird durch ein Signal oder einen Signaldruck geschaltet, das von der Signaleinheit 18 erzeugt und über eine Signalleitung 20 geleitet wird.

Die beiden Druckregler 3, 4 sind jeweils als 3/3-Wege-Ventile mit zwei Eingängen 21, 22 und einem Ausgang 23 ausgebildet. Der Eingang 21 ist dabei mit einem Ölsumpf 24 und der Eingang 22 mit der Öldruckversorgung 5 verbunden. Der Ausgang 23 jedes Druckreglers 3, 4 führt zu dem jeweils zugeordneten Umschaltventil 6, 7.

Das erste Umschaltventil 6 ist als 5/2-Wege-Ventil ausgebildet ist. Das 5/2-WegeVentil 6 weist drei Eingänge 25, 26, 27 und zwei Ausgänge 28, 29 auf. Der Eingang 25 ist mit dem Ölsumpf 24 verbunden, während der Eingang 26 mit dem Ausgang 23 des ersten Druckreglers 3 verbunden ist. Auf den Eingang 27 wird später eingegangen.

Der Ausgang 28 ist über eine Leitung 39 an einem Umschalter 30 angeschlossen, der mit dem Schaltsystem 11 verbunden ist. Der Ausgang 29 führt zu der ersten Kupplung 8.

Das zweite Umschaltventil 7 ist als 7/2-Wege-Ventil mit vier Eingängen 31, 32, 33, 34 und drei Ausgängen 35, 36, 37 ausgebildet. Die Eingänge 31, 33 sind mit dem Ölsumpf 24 verbunden, während die Eingänge 32, 34 mit dem Ausgang 23 des zweiten Druckreglers 4 verbunden sind. Der Ausgang 35 ist über eine Leitung 40 an dem Umschalter 30 angeschlossen, während der Ausgang 36 zur zweiten Kupplung 10 führt. Über eine Verbindungsleitung 38 ist der Ausgang 37 des zweiten Druckreglers 7 mit bereits oben angesprochenen Eingang 27 verbunden.

Das Signalelement 17, hier als 3/2-Wege-Schaltventil ausgebildet, ist dem Umschaltventil 6 vorgeschaltet und schaltet den Druck der Öldruckversorgung 5 im elektrisch angeregten Zustand auf das Umschaltventil 7 durch, so dass dieses aus einer federbelasteten Ruhestellung, einer Stellung A_{I}, wie sie in Figur 2 dargestellt ist, in eine Stellung B_{I} geschaltet wird. Wie auch das Signalelement 17 ist das dem Umschaltventil 7 vorgeschaltete Signalelement 18 als 3/2-Wege-Schaltventil ausgebildet. Das Umschaltventil 7 nimmt in Ruhestellung die Stellung A_{II} und bei Anliegen eines Signals oder Steuerdrucks eine Stellung B_{II} ein.

In der Stellung A_{I} (wie in Figur 2 dargestellt) stellt das erste Umschaltventil 6 eine Verbindung zwischen dem ersten Druckregler 3 und der ersten Kupplung 8 her. Auch das zweite Umschaltventil 8 befindet sich in der Stellung A_{II}, bei der die zweite Kupplung 10 und der zweite Druckregler 4 miteinander verbunden sind. In diesen Stellungen A_{I}, A_{II} werden die beiden Kupplungen 8, 10 jeweils mit einem geregelten Druck beaufschlagt, so dass beide Kupplungen für eine gewisse Überschneidungsphase entsprechend der geregelten Drücke der Druckregler 3, 4 gleichzeitig ein Drehmoment übertragen können.

Wird beispielsweise das Signalelement 17 elektrisch betätigt, wird ein Signal oder Steuerdruck über die Signalleitung 19 auf das erste Umschaltventil 6 geschaltet, wodurch dieses gegen die Federkraft in die Stellung B_{I} gedrückt wird. In dieser Stellung B_{I} ist die erste Kupplung 8 von dem Druckregler 3 getrennt und das in einem der Kupplung 8 zugehörigen Kupplungszylinder unter Druck stehende Druckmedium (Öl) wird über den Auslass 29 und den Einlass 27 des ersten Umschaltventils 7 durch die Verbindungsleitung 38 zum Ausgang 37 geleitet. Soweit er sich in der Stellung A_{II} befindet (wie in Figur 2 dargestellt), stellt der Druckregler 7 eine Verbindung zwischen dem Auslass 37 und dem Eingang 33 bzw. dem Ölsumpf 24 her. Als Folge lässt der Druck im Kupplungszylinder nach und die Kupplung 8 öffnet sich. Zudem wird in der Stellung B_{I} des ersten Umschaltventils 6 Eingang 26 mit Ausgang 28 verbunden, sodass der geregelte Druck des ersten Druckreglers 3 an dem Umschalter 30 und, wenn der Umschalter 30 den Druck durchschaltet, auch an dem Schaltsystem 11 zum Ein- und Auslegen der Gänge anliegt.

Befindet sich das zweite Umschaltventil 7 nicht, wie im obigen Absatz angenommen, in der in Fig. 2 dargestellten Stellung (Stellung A_{II}), sondern in der Stellung B_{II}, so wird die erste Kupplung 8 mit dem zweiten Druckregler 4 verbunden, während gleichzeitig die zweite Kupplung 10 auf den Ölsumpf 24 geschaltet wird.

Im Folgenden wird nun beschrieben, welche Schaltungen vorzugsweise vorgenommen werden, wenn der Druckregler 3 oder der Druckregler 4 ausfallen.

Fällt beispielsweise der erste Druckregler 3 in einer geschlossenen Stellung aus, so wie sie der Figur 2 zu entnehmen ist, wird die erste Kupplung 8 durch den zweiten Druckregler 4 betätigt, wobei sich das erste Umschaltventil 6 in der Stellung B_{I} und das zweite Umschaltventil 7 in der Stellung B_{II} befinden. Dadurch ist eine Verbindung zwischen dem zweiten Druckregler 4 über die Verbindungsleitung 38 zu der ersten Kupplung 8 hergestellt. So ist ein Notlaufbetrieb des Doppelkupplungsgetriebes mit den Gängen des ersten Teilbereiches möglich, zu denen vorzugsweise ein erster Vorwärtsgang und ein Rückwärtsgang gehören.

Die Gänge des ersten Teilgetriebes können durch den zweiten Druckregler 4 ein- und ausgelegt werden. Zum Ein- oder Auslegen eines Ganges des ersten Teilgetriebes wird das erste Umschaltventil 6 in die Stellung A_{I} geschaltet, so dass die erste Kupplung 8 mit dem ausgefallenen ersten Druckregler 3 verbunden wird, wobei sich Letztgenannter in geöffneter Stellung befindet, so dass die erste Kupplung 8 geöffnet wird.

In der Stellung B_{I} des ersten Umschaltventils 6 wird der Umschalter 30 über den Ausgang 28 und den Eingang 26 mit dem ausgefallenen ersten Druckregler 3 in geöffneter Stellung verbunden. Aufgrund der dann am Umschalter 30 anliegenden Druckverhältnissen ist eine Verbindung zwischen dem zweiten Druckregler 4 und dem Schaltsystem 11 gegeben, wodurch sich mit einem geregelten Druck die Gänge des ersten Teilgetriebes einlegen lassen.

Ist hingegen der erste Druckregler 3 in einer geöffneten Stellung ausgefallen, folgt das Einlegen bzw. Auslegen der Gänge des ersten Teilgetriebes nicht über den zweiten Druckregler 4, sondern durch den Druck des Hauptdruckreglers 16 der Öldruckversorgung 5. Dabei wirkt der Hauptdruckregler 16 über den geöffneten Druckregler 3 und dem sich in Stellung B_{I} befindlichen Umschaltventil 6 mit dem Umschalter 30 zusammen. Dabei gibt der Umschalter 30 aufgrund des Druckgefälles zwischen der Leitung 39 und der Leitung 40 die Verbindung zum Schaltsystem 11 frei. Während des Ein- oder Auslegens der Gänge des ersten Teilgetriebes ist der geregelte Druck am Ausgang 23 des zweiten Druckreglers 4 und somit auch in der Leitung 40 sehr klein, da ansonsten die erste Kupplung 8 nicht geöffnet wäre. Somit stellt sich ein Druckgefälle zwischen Leitung 39 und Leitung 40 ein, wodurch der Umschalter 30 die Verbindung zwischen dem ersten Umschaltventil 6 und dem Schaltsystem 11 freigibt.

Falls ein Gang im zweiten Teilgetriebe noch eingelegt ist, wird dieser, bevor das Doppelkupplungsgetriebe im Notlaufbetrieb nur über die erste Kupplung 8 betrieben wird, ausgelegt, indem der für das Auslegen notwendige Druck durch den zweiten Druckregler 4 bereitgestellt wird, falls der erste Druckregler 3 in der geschlossenen Stellung ausgefallen ist. Bei Ausfall des ersten Druckreglers 3 in geöffneter Stellung erfolgt das Auslegen des Ganges über den Hauptdruckregler 16.

Fällt der zweite Druckregler 4 aus, so wird das zweite Umschaltventil 7 in die Stellung A_{I} geschaltet, so dass der zweite Druckregler 4 sowohl von dem Schaltsystem 11 als auch von der ersten Kupplung 8 getrennt ist. Über den ersten Druckregler 3 lassen sich die Gänge des ersten Teilgetriebes ein- und auslegen und die erste Kupplung 8 betätigen, so dass ein entsprechender Notlaufbetrieb des Doppelkupplungsgetriebes über die erste Kupplung mit den entsprechenden Gängen des ersten Teilgetriebes möglich ist.

Ist der zweite Druckregler 4 dabei in einer geöffneten Stellung (wie in Figur 2 dargestellt) ausgefallen, ist die zweite Kupplung 10 über das in Stellung II befindliche Umschaltventil 7 mit dem Ölsumpf 24 verbunden und damit drucklos gestellt. Somit kann kein Drehmoment zwischen dem Antrieb und dem zweiten Teilgetriebe übertragen werden. Ein möglicherweise eingelegter Gang des zweiten Teilgetriebes muss daher nicht notwendigerweise für den Notlaufbetrieb des Doppelkupplungsgetriebes ausgelegt werden. Jedoch ist zu beachten, dass die Fahrzeuggeschwindigkeit in geeigneter Weise begrenzt ist, um das zweite Teilgetriebe mit dem eingelegten Gang nicht zu überlasten.

Alternativ kann der eingelegte Gang des zweiten Teilgetriebes durch den ersten Druckregler 3 ausgelegt werden. Ein Auslegen über den ersten Druckregler 3 ist jedoch nur dann möglich, wenn der zweite Druckregler 4 in geschlossener Stellung ausgefallen ist. Ist dieser aber in einer geöffneten Stellung ausgefallen, so wird der Gang im zweiten Teilgetriebe durch den Hauptdruckregler 16 ausgelegt.

### Bezugszeichenliste

- 1: Steuerungsvorrichtung
- 2: Regelungseinheit
- 3: Erster Druckregler
- 4: Zweiter Druckregler
- 5: Öldruckversorgung
- 6: Erstes Umschaltventil
- 7: Zweites Umschaltventil
- 8: Erste Kupplung
- 9: Gruppenauswahl
- 10: Zweite Kupplung
- 11: Schaltsystem
- 12: Erste Gruppe von Aktuatoren
- 13: Zweite Gruppe von Aktuatoren
- 14: Pfeil
- 15: Pumpe
- 16: Hauptdruckregler
- 17: Signalelement
- 18: Signalleitung
- 19: Signalleitung
- 20: Signalleitung
- 21: Eingang
- 22: Eingang
- 23: Ausgang
- 24: Ölsumpf
- 25: Eingang
- 26: Eingang
- 27: Eingang
- 28: Ausgang
- 29: Ausgang
- 30: Umschalter
- 31: Eingang
- 32: Eingang
- 33: Eingang
- 34: Eingang
- 35: Ausgang
- 36: Ausgang
- 37: Ausgang
- 38: Verbindungsleitung
- 39: Leitung
- 40: Leitung

## Patentansprüche

1. Hydraulische Steuerungsvorrichtung (1) für ein automatisiertes Doppelkupplungsgetriebe, das eine erste Kupplung (8) mit einem ersten Teilgetriebe und eine zweite Kupplung (10) mit einem zweiten Teilgetriebe sowie ein Schaltsystem (11) zum Ein-/Auslegen von Gängen der zwei Teilgetriebe aufweist, mit einer Regelungseinheit (2), die wenigstens einen regelbaren Druck und/oder einen regelbaren Volumenstrom für die Betätigung der ersten und zweiten Kupplung (8, 10) und für die Betätigung des Schaltsystems (11) vorgibt, und mit einer Umschaltvorrichtung, die zwischen der Regelungseinheit (2) und den Kupplungen (8, 10) beziehungsweise dem Schaltsystem (11) angeordnet ist und durch die der regelbare Druck beziehungsweise der regelbare Volumenstrom auf die Kupplungen (8, 10) oder das Schaltsystem (11) schaltbar ist, wobei die Regelungseinheit (2) ein erstes Regelventil (3) und ein zweites Regelventil (4) aufweist und wobei die Umschalteinrichtung
- ein erstes Umschaltventil (6), das
a) in einer Stellung A_{I} das erste Regelventil (3) mit der ersten Kupplung (8) verbindet und von dem Schaltsystem (11) trennt und
b) in einer Stellung B_{I} das erste Regelventil (3) mit dem Schaltsystem (11) verbindet und von der ersten Kupplung (8) trennt; und
- ein zweites Umschaltventil (7) aufweist, das
c) in einer Stellung A_{II} das zweite Regelventil (4) mit der zweiten Kupplung (10) verbindet und von dem Schaltsystem (11) trennt und,
d) in einer Stellung B_{II} das zweite Regelventil (4) mit dem Schaltsystem (11)
verbindet und von der zweiten Kupplung (10) trennt, **dadurch gekennzeichnet, dass** in der Stellung B_{I} des ersten Umschaltventils (6) und bei Stellung B_{II} des zweiten Umschaltventils (7) eine Verbindung zwischen dem zweiten Regelventil (4) und der ersten Kupplung (8) hergestellt ist und die zweite Kupplung (10) im wesentlichen drucklos gestellt ist.

2. Steuerungsvorrichtung (1) nach Anspruch1, **dadurch gekennzeichnet, dass** das erste Teilgetriebe einen ersten Vorwärtsgang und einen Rückwärtsgang aufweist.

3. Steuerungsvorrichtung (1) nach Anspruch 1, **dadurch gekennzeichnet, dass** zwischen dem ersten Umschaltventil (6) beziehungsweise dem zweiten Umschaltventil (7) und dem Schaltsystem (11) ein Umschalter (30) vorgesehen ist, der sicherstellt, dass das Schaltsystem (11) entweder mit dem Druck/Volumenstrom des ersten Regelventils (3) oder mit dem Druck/Volumenstrom des zweiten Regelventils (4) beaufschlagt wird.

4. Steuerungsvorrichtung (1) nach Anspruch 3, **dadurch gekennzeichnet, dass** der Umschalter als Wechselventil (30) ausgebildet ist.

5. Steuerungsvorrichtung (1) nach einem der Ansprüche 1 bis 4, **dadurch gekennzeichnet, dass** eine Gruppenauswahl (9) vorgesehen ist, durch die die Regelungseinheit (2) entweder mit einer ersten, dem ersten Teilgetriebe zugeordneten Gruppe von Aktuatoren (12) oder mit einer zweiten, dem zweiten Teilgetriebe zugeordneten Gruppe von Aktuatoren (13) verbunden wird.

6. Verfahren zum Steuern eines Doppelkupplungsgetriebes mit einer Steuerungsvorrichtung (1) nach einem der Ansprüche 1 bis 5, **dadurch gekennzeichnet, dass** bei Ausfall des ersten Regelventils (3) das erste Umschaltventil (6) in Stellung B_{I} und das zweite Umschaltventil (7) in die Stellung B_{II} geschaltet werden.

7. Verfahren nach Anspruch 6, **dadurch gekennzeichnet, dass** die Gänge des ersten Teilgetriebes bei Ausfall des ersten Regelventils (3)
- in einer geschlossenen Stellung mit Hilfe des zweiten Regelventils (4), und
- in einer geöffneten Stellung mit Hilfe eines Hauptdruckreglers (16) einer Öldruckversorgung (6)
ein- und ausgelegt werden.

8. Verfahren nach Anspruch 6 oder 7, **dadurch gekennzeichnet, dass** ein eingelegter Gang des zweiten Teilgetriebe bei Ausfall des ersten Regelventils (3)
- in der geschlossenen Stellung mit Hilfe des zweiten Regelventils (4) ausgelegt wird, und
- in einer geöffneten Stellung mit Hilfe des Hauptdruckreglers (16) ausgelegt wird.

9. Verfahren nach einem der Ansprüche 6 bis 8, **dadurch gekennzeichnet, dass** bei Ausfall des zweiten Regelventils (4) das zweite Umschaltventil (7) in Stellung A_{II} geschaltet oder gehalten wird.

10. Verfahren nach Anspruch 9, **dadurch gekennzeichnet, dass** ein eingelegter Gang des zweiten Teilgetriebes zunächst ausgelegt wird, indem das zweite Umschaltventil (7) in Stellung B_{II} geschaltet wird,
wobei der eingelegte Gang bei Ausfall des zweiten Regelventils (4)
- in der geschlossenen Stellung mit Hilfe des ersten Regelventils (3), und
- in einer geöffneten Stellung mit Hilfe des Hauptdruckreglers (16) ausgelegt wird.

## Claims

1. Hydraulic control apparatus (1) for an automatic dual clutch transmission, which includes first clutch (8) with a first partial transmission and a second clutch (10) with a second partial transmission, as well as a shifting system (11) for engaging/releasing gears of the two partial transmissions, having a control unit (2) which predetermines at least one controllable pressure and/or at least one controllable volumetric flow for the actuation of the first and second clutches (8, 10) and for the actuation of the shifting system (11), and having a switching apparatus, which is arranged between the control unit (2) and the clutches (8, 10) or the shifting system (11) and can be used to switch the controllable pressure or the controllable volumetric flow between the clutches (8, 10) or the shifting system (11), the control unit (2) having a first control valve (3) and a second control valve (4), and the switching device having
- a first switching valve (6), which
a) in a first position A_{I} connects the first control valve (3) to the first clutch (8) and disconnects it from the shifting system (11), and
b) in a position B_{I} connects the first control valve (3) to the shifting system (11) and disconnects it from the first clutch (8); and
- having a second switching valve (7), which
c) in a position A_{II} connects the second control valve (4) to the second clutch (10) and disconnects it from the shifting system (11), and
d) in a position B_{II} connects the second control valve (4) to the shifting system (11) and disconnects it from the second clutch (10),
**characterized in that** in position B_{I} of the first switching valve (6) and at position B_{II} of the second switching valve (7) a connection is produced between the second control valve (4) and the first clutch (8) and the second clutch (10) is set essentially pressure-free.

2. Control apparatus (1) according to Claim 1, **characterized in that** the first partial transmission has a first forward gear and a reverse gear.

3. Control apparatus (1) according to Claim 1, **characterized in that** a switching means (30) is provided between the first switching valve (6) and between the second switching valve (7) and the shifting system (11), which switching means (30) ensures that the shifting system (11) is acted on either by the pressure/volumetric flow of the first control valve (3) or by the pressure/volumetric flow of the second control valve (4).

4. Control apparatus (1) according to Claim 3, **characterized in that** the switching means is designed as a changeover valve (30).

5. Control apparatus (1) according to one of Claims 1 to 4, **characterized in that** a group selector (9) is provided, by means of which the control unit (2) is connected either to a first group of actuators (12) assigned to the first partial transmission or to a second group of actuators (13) assigned to the second partial transmission.

6. Method for controlling a dual clutch transmission using a control apparatus (1) according to one of Claims 1 to 5, **characterized in that** if the first control valve (3) fails the first switching valve (6) is switched into position B_{I} and the second switching valve (7) is switched into position B_{II}.

7. Method according to Claim 6, **characterized in that** if the first control valve (3) fails the gears of the first partial transmission are engaged and disengaged
- in a closed position with the aid of the second control valve (4), and
- in an open position with the aid of a main pressure regulator (16) of an oil pressure supply (6) .

8. Method according to Claim 6 or 7, **characterized in that** if the first control valve (3) fails an engaged gear of the second partial transmission
- in the closed position is disengaged with the aid of the second control valve (4), and
- in an open position is disengaged with the aid of the main pressure regulator (16).

9. Method according to one of Claims 6 to 8, **characterized in that** if the second control valve (4) fails the second switching valve (7) is switched into or held in position A_{II}.

10. Method according to Claim 9, **characterized in that** an engaged gear of the second partial transmission is initially disengaged by the second switching valve (7) being switched into position B_{II},
wherein if the second control valve (4) fails the engaged gear is disengaged
- in the closed position with the aid of the first control valve (3), and
- in an open position with the aid of the main pressure regulator (16).

## Revendications

1. Dispositif de commande hydraulique (1) pour une boîte de vitesses automatisée à double embrayage, qui présente un premier embrayage (8) avec une première boîte de vitesses partielle et un deuxième embrayage (10) avec une deuxième boîte de vitesses partielle ainsi qu'un système de commutation (11) pour enclencher/désenclencher des vitesses des deux boîtes de vitesses partielles, avec une unité de régulation (2) qui prédéfinit au moins une pression réglable et/ou un débit volumique réglable pour l'actionnement du premier et du deuxième embrayage (8, 10) et pour l'actionnement du système de commutation (11), et avec un dispositif d'inversion, qui est disposé entre l'unité de régulation (2) et les embrayages (8, 10) ou le système de commutation (11), et qui permet de commuter la pression réglable ou le débit volumique réglable aux embrayages (8, 10) ou au système de commutation (11), l'unité de régulation (2) présentant une première soupape de régulation (3) et une deuxième soupape de régulation (4) et le dispositif d'inversion présentant
- une première soupape d'inversion (6) qui
a) dans une position A_{I}, relie la première soupape de régulation (3) au premier embrayage (8) et la sépare du système de commutation (11) et
b) dans une position B_{I} relie la première soupape de régulation (3) au système de commutation (11) et la sépare du premier embrayage (8) ; et
- une deuxième soupape d'inversion (7), qui
c) dans une position A_{II} relie la deuxième soupape de régulation (4) au deuxième embrayage (10) et la sépare du système de commutation (11) et
d) dans une position B_{II} relie la deuxième soupape de régulation (4) au système de commutation (11) et la sépare du deuxième embrayage (10),
**caractérisé en ce que** dans la position B_{I} de la première soupape d'inversion (6), et dans la position B_{II} de la deuxième soupape d'inversion (7), il s'établit une connexion entre la deuxième soupape de régulation (4) et le premier embrayage (8) et le deuxième embrayage (10) est réglé essentiellement sans pression.

2. Dispositif de commande (1) selon la revendication 1, **caractérisé en ce que** la première boîte de vitesses partielle présente une première vitesse de marche avant et une vitesse de marche arrière.

3. Dispositif de commande (1) selon la revendication 1, **caractérisé en ce que** l'on prévoit entre la première soupape d'inversion (6) ou la deuxième soupape d'inversion (7) et le système de commutation (11) un inverseur (30) qui fait en sorte que le système de commutation (11) soit sollicité soit avec la pression/le débit volumique de la première soupape de régulation (3) soit avec la pression/le débit volumique de la deuxième soupape de régulation (4).

4. Dispositif de commande (1) selon la revendication 3, **caractérisé en ce que** l'inverseur est réalisé sous forme de soupape d'échange (30).

5. Dispositif de commande (1) selon l'une quelconque des revendications 1 à 4, **caractérisé en ce que** l'on prévoit une sélection de groupe (9) qui permet de connecter l'unité de régulation (2) soit à un premier groupe d'actionneurs (12) associé à la première boîte de vitesses partielle soit à un deuxième groupe d'actionneurs (13) associé à la deuxième boîte de vitesses partielle.

6. Procédé pour commander une boîte de vitesses à double embrayage comprenant un dispositif de commande (1) selon l'une quelconque des revendications 1 à 5, **caractérisé en ce que** dans le cas d'une défaillance de la première soupape de régulation (3), la première soupape d'inversion (6) est commutée dans la position B_{I} et la deuxième soupape d'inversion (7) est commutée dans la position B_{II}.

7. Procédé selon la revendication 6, **caractérisé en ce que** les vitesses de la première boîte de vitesses partielle, en cas de défaillance de la première soupape de régulation (3),
- sont enclenchées et désenclenchées dans une position fermée à l'aide de la deuxième soupape de régulation (4), et
- sont enclenchées et désenclenchées dans une position ouverte à l'aide d'un régulateur de pression principal (16) d'une alimentation en huile sous pression (6).

8. Procédé selon la revendication 6 ou 7, **caractérisé en ce qu'**une vitesse enclenchée de la deuxième boîte de vitesses partielle, en cas de défaillance de la première soupape de régulation (3),
- est désenclenchée dans la position fermée à l'aide de la deuxième soupape de régulation (4), et
- est désenclenchée dans une position ouverte à l'aide du régulateur de pression principal (16).

9. Procédé selon l'une quelconque des revendications 6 à 8, **caractérisé en ce que** dans le cas d'une défaillance de la deuxième soupape de régulation (4), la deuxième soupape d'inversion (7) est commutée ou maintenue dans la position A_{II}.

10. Procédé selon la revendication 9, **caractérisé en ce qu'**une vitesse enclenchée de la deuxième boîte de vitesses partielle est d'abord désenclenchée en commutant la deuxième soupape d'inversion (7) dans la position B_{II},
la vitesse enclenchée, dans le cas d'une défaillance de la deuxième soupape de régulation (4),
- étant désenclenchée dans la position fermée à l'aide de la première soupape de régulation (3) et
- étant désenclenchée dans une position ouverte à l'aide du régulateur de pression principal (16).
